# EUROPEAN PATENT SPECIFICATION

(11) **EP 3 690 783 B1**
(45) Date of publication and mention of the grant of the patent: **29.01.2025**
(21) Application number: 19154847.8
(22) Date of filing: 31.01.2019
(51) Int. Cl.: G06Q 20/34, G06Q 30/018, G07F 7/08, G06Q 20/04, G06Q 20/32, G06Q 20/36, G06Q 20/38, G06Q 20/40, G07B 15/02

(54) **DATA PROCESSING APPARATUSES AND METHODS**
DATENVERARBEITUNGSVORRICHTUNGEN UND -VERFAHREN
APPAREILS ET PROCÉDÉS DE TRAITEMENT DE DONNÉES

(43) Date of publication of application: 05.08.2020
(73) Proprietor: Mastercard International Incorporated, Purchase NY 10577 (US)
(72) Inventor: ROBERTS, David Anthony, Warrington, Cheshire WA4 5RD (GB); PITCHER, Joseph, Wirral, Merseyside CH60 2SL (GB)
(74) Representative: Walker-Smith, Samantha Lynelle Zhi

(56) References cited:
- WO-A1-2018/213198
- FENG BAO ET AL: "Design of portable mobile devices based e-payment system and e-ticketing system with digital signature", PROCEEDINGS INTERNATIONAL CONFERENCES ON INFO-TECH AND INFO-NET (ICII) 2001, IEEE, BEIJING, vol. 6, 29 October 2001 (2001-10-29), pages 7 - 12, XP010576921, ISBN: 978-0-7803-7010-4, DOI: 10.1109/ICII.2001.982996
- FAN KAI ET AL: "NFC Secure Payment and Verification Scheme for Mobile Payment", 4 August 2016, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 116 - 125, ISBN: 978-3-642-17318-9, XP047351982

## Description

### BACKGROUND

### Field of the Disclosure

The present invention relates to data processing apparatuses and methods.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

In recent years, terminal devices such as smartphones, tablet computers and the like have become more capable at performing a wide range of data processing tasks. These include allowing a large variety of different types of information to be transmitted between users of such devices (such as voice calls, textual messages, videos and images) as well as allowing such terminal devices to be used for performing further data processing functions which would normally (in the past) have required a separate device and/or process.

One such example of such new functionality of terminal devices is the electronic storage of items which, traditionally, would have required to be present as a physical hard copy (such as a paper copy). Such items include electronic tickets, coupons or the like. In particular, it is now possible for terminal devices to store digital data representative of transport tickets (such as railway tickets, bus tickets and the like), event tickets (such as cinema or theatre tickets) or any other similar data which, in the past, would have required a user to carry a separate hard copy of a ticket.

A paper by Fan Kai et. al. entitled *"NFC Secure Payment and Verification Scheme for Mobile Payment"* describes an NFC mobile electronic ticket secure payment and verification scheme. The proposed scheme uses a CS E-Ticket and offline session key generation and distribution technology to prevent major attacks and increase the security of NFC. Another paper by Feng Bao et. al. entitled *"Design of portable mobile devices based e-payment system and e-ticketing system with digital signature"* describes the application of digital signature in e-payment and e-ticketing systems where distributed verification is required. WO 2018/213198 A1 describes systems and methods for facilitating use of physical tokens in a transit system.

A problem, however, is how to ensure the authenticity (that is, that the tickets are genuine) and integrity (that is, that the tickets have not been altered by an unauthorised party) of such electronic tickets. In particular, it is desirable to prevent fake or forged electronic tickets to be stored on terminal devices and used in order to grant a user of such a terminal device unauthorised access to a ticketed transport network, event or the like. There is therefore a need to alleviate these problems.

### SUMMARY

The invention is defined by the appended claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

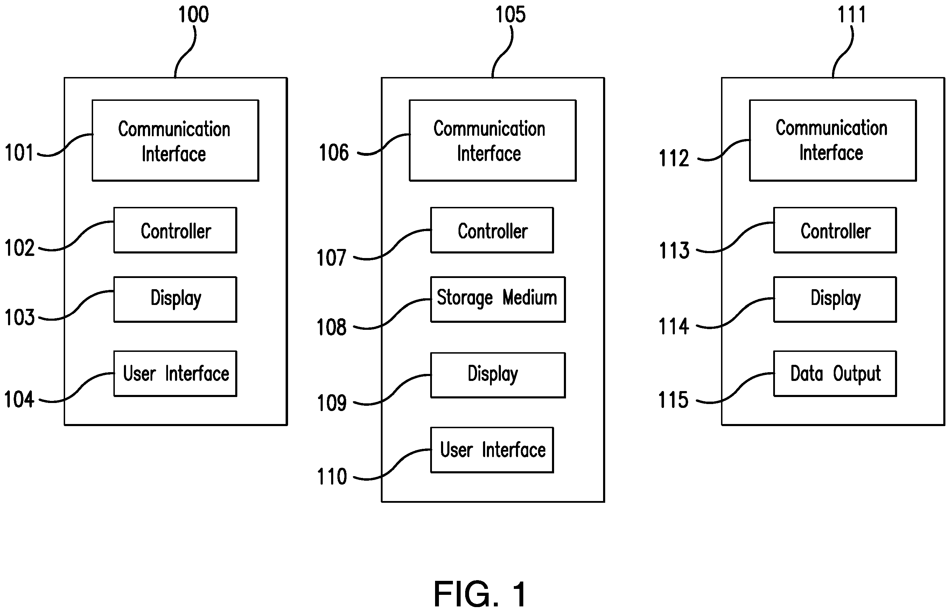

Figure 1 schematically shows a plurality of data processing apparatuses according to an embodiment of the present technique;
Figures 2A to 2C schematically shows a process carried out using data processing apparatuses according to an embodiment of the present technique;
Figure 3 schematically shows signals transmitted between data processing apparatuses according to an embodiment of the present technique;
Figure 4 schematically shows an image displayed on an electronic display of a data processing apparatus according to an embodiment of the present technique;
Figure 5 schematically shows a verification and validation process according to an embodiment of the present technique;
Figure 6 schematically shows a first method according to an embodiment of the present technique;
Figure 7 schematically shows a second method according to an embodiment of the present technique; and

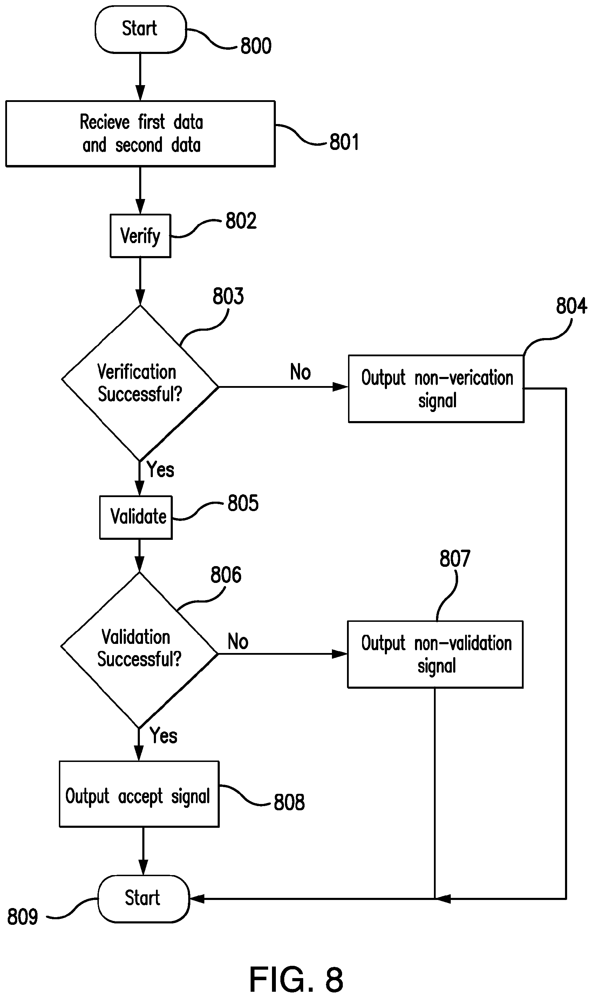

Figure 8 schematically shows a third method according to an embodiment of the present technique.

### DESCRIPTION OF THE EMBODIMENTS

Referring now to the drawings, wherein like reference numerals designate identical or corresponding parts throughout the several views.

Data processing apparatus 100 comprises a communication interface 101, a controller 102, an electronic display 103 (such as a liquid crystal display (LCD) or the like) and a user interface 104. Each of these components may be implemented using appropriate circuitry, for example. The communication interface 101, display 103 and user interface 104 are controlled by the controller 102. In particular, the controller 102 comprises processing circuitry configured to process instructions for controlling the operation of each of the communication interface 101, display 103 and user interface 104. In an embodiment, the data processing apparatus 100 is a point of sale (POS) device for allowing a user to purchase an electronic ticket.

The data processing apparatus 105 comprises a communication interface 106, a controller 107, a storage medium 108, an electronic display 109 (such as an LCD or the like) and a user interface 110. Each of these components may be implemented using appropriate circuitry, for example. Each of the communication interface 106, storage medium 108, display 109 and user interface 110 is controlled by the controller 107. In particular, the controller 107 comprises processing circuitry configured to process instructions for controlling the operation of each of the communication interface 106, storage medium 108, display 109 and user interface 110. In an embodiment, the data processing apparatus 105 is a terminal device such as a smart phone or tablet computer belonging to a user who wishes to purchase an electronic ticket for storage in the storage medium 108 of the terminal device 105.

The data processing apparatus 111 comprises a communication interface 112, a controller 113, an electronic display 114 (such as an LCD display or the like) and data output circuitry 115. Each of these elements may be implemented using appropriate circuitry, for example. Each of the communication interface 112, display 114 and data output circuitry 115 are controlled by the controller 113. In particular, the controller comprises processing circuitry configured to process instructions for controlling an operation of each of the communication interface 112, display 114 and data output circuitry 115. In an embodiment, the data processing apparatus 111 is for checking the authenticity and/or the validity of an electronic ticket stored in the storage medium 108 of a terminal device 105 of a user wishing to gain access to a ticketed service such as a transport network or event.

In the following embodiments, the data processing device 100 is assumed to be a POS device, the data processing apparatus 105 is assumed to be a terminal device and the data processing apparatus 111 is assumed to be a ticket checking device. However, it will be appreciated that the principles described may be applied to any data processing apparatus which is configured to implement the functions of the described components of each of the POS device 100, terminal device 105 and ticket checking device 111. The present technique is therefore not limited for use with the specific device types as described.

In an embodiment of the terminal device 105, the communication interface 106 is configured to transmit data to or receive data from the POS device 100 using electromagnetic induction when the terminal device 105 is brought into proximity to the POS device 100 (in particular, when the communication interface 106 of the terminal device 105 is brought into proximity to the communication interface 101 of the POS device 100). The communication interfaces 106 and 101 may implement Near Field Communication (NFC) technology, for example. NFC technology enables data to be transmitted between two NFC interfaces when those interfaces are brought to within a proximity of each other of the order of a few centimetres (in particular, less than 4cm). The controller 107 is configured to control the communication interface 106 to transmit first data indicative of a user of the terminal device 105 to the POS device 100. The first data is data for identifying specifically the user of the terminal device 105 and according to the invention, is an electronic payment card number indicative of an electronic payment card of the user of the terminal device 105. The electronic payment card may be a credit card, debit card or charge card, for example, and the electronic payment card number may be a primary account number (PAN). The controller 107 is configured to control the communication interface 106 to transmit second data to or receive second data from the POS device 100, the transmission or reception of the second data occurring in response to the completion of a predetermined data processing event. In an embodiment, the predetermined data processing event is an electronic payment card payment made by the user of the terminal device 105 to a user (e.g. ticket vendor, such as a transport organisation, theatre or cinema) of the POS device 100. The controller 107 is configured to control the communication interface 106 to receive third data from the POS device 100. The third data is received in response to the completion of the predetermined data processing event (e.g. payment for a ticket) and is digitally signed by the POS device 100. The digital signature of the third data is generated using the first data and the third data. In the example in which the POS device 100 is a POS device of a ticket vendor, the third data comprises an electronic ticket for allowing the user of the terminal device 105 to use a predetermined service which requires the user to have a ticket in order for the service to be delivered. As previously mentioned, an electronic ticket is a ticket in electronic form. It comprises digital data representative of an ticket which grants a user access to use a particular ticketed service. An electronic ticket may be used instead of a paper ticket, for example. The controller 107 stores the received third data (e.g. the electronic ticket data) in the storage medium 108. It is noted that, more generally, the third data need not represent electronic ticket data but may represent, more generally, electronic content provided to the user of the terminal device 105 in response to the completion of the electronic payment card payment. The electronic content may be any content for which there is a benefit in being able to authenticate the source of the electronic content using a digital signature. Although the below-mentioned embodiments discuss the specific use of electronic tickets, it will be appreciated that these same embodiments may be applied for use with electronic content more generally (and are therefore not limited to use only with electronic tickets).

In an embodiment of the POS device 100, the communication interface 101 is configured to transmit data to or receive data from the terminal device 105 using electromagnetic induction when the terminal device 105 is brought into proximity to the POS device 100. For example, the communication interface 101 may be an NFC interface (in which case, again, the terminal device 105 is brought into proximity to the POS device 100 when brought within a distance of the order of a few centimetres of the POS device 100, in particular less than 4cm). The controller 102 is configured to control the communication interface 101 to receive first data indicative of a user of the terminal device 105 from the terminal device 105. As previously described, according to the invention, the first data is an electronic payment card number of an electronic payment card of the user of the terminal device 105. The controller 102 is configured to control the communication interface 101 to transmit second data to or receive second data from the terminal device 105, the transmission or reception of the second data occurring in response to the completion of a predetermined data processing event (e.g. the completion of an electronic payment card payment made by the user of the terminal device 105 to a vendor operating the POS device 100). In response to the completion of the predetermined data processing event, the controller 102 is configured to generate third data (e.g. electronic ticket data) and to digitally sign the third data using the first data and third data. The controller 102 then controls the communication interface 101 to transmit the digitally signed third data to the terminal device 105.

In an embodiment of the ticket checker 111, the communication interface 112 is configured to receive first data from the terminal device 105, the first data being indicative of a user of the terminal device 105 (e.g. the first data comprising an electronic payment card number of an electronic payment card of the user of the terminal device 105). This is the same first data that was previously transmitted to the POS device 100. The communication interface 112 is configured to receive second data from the terminal device 105, the second data having been previously received by the terminal device 105 in response to the completion of a predetermined data processing event and being digitally signed using the first data and second data. Thus, in this case, the second data may comprise electronic ticket data which has been generated and signed by the POS device 100, stored in the storage medium 108 of the terminal device 105 and transmitted from the terminal device 105 to the ticket checking device 111 together with a digital signature generated using the electronic ticket data and the first data (e.g. electronic payment card number). The controller 113 is then configured to perform a verification process of the digital signature of the second data. In response to a successful verification of the digital signature of the second data, the controller 113 is configured to output a signal indicating that the digital signature of the second data has been verified. On the other hand, in response to an unsuccessful verification of the digital signature of the second data, the controller 113 is configured to output a signal indicating that the digital signature of the second data has not been verified.

In the example in which the second data is representative of an electronic ticket, in response to a successful verification of the digital signature of the electronic ticket, the controller 113 may output a signal to control the display 114 to indicate that the electronic ticket has been successfully verified and/or to output a signal to control the data output circuity 115 to output a signal to another device such as a ticket barrier (not shown) to open electronically controlled gates of the ticket barrier in order to allow the user of the terminal device 105 access to the ticketed service associated with the electronic ticket.

It is noted that the communication interface 112 may receive the first and second data from the terminal device 105 using electromagnetic induction when the terminal device 105 and ticket checking device 111 are brought into proximity to each other (e.g. if the terminal device 105 is brought into proximity of a reader device comprising the communication interface 112 of the ticket checking device 111 at the entrance to a transport network or event). The communication interface 112 may operate using NFC, for example (in which case, again, the terminal device 105 is brought into proximity to the checking device 111 when brought within a distance of the order of a few centimetres of the checking device 111, in particular less than 4cm). Alternatively, the first and second data received by the checking device 111 may be received via any other suitable method for transmitting data from one device to another device. For example, the first and second data received by the checking device 111 may be received as a radio signal transmitted by the terminal device 105 (more specifically, the first data (e.g. electronic payment card number) and second data (e.g. electronic ticket data with digital signature) is comprised within a radio signal transmitted from the communication interface 106 of the terminal device 105 to the communication interface 112 of the checking device 111). Such a radio signal may be a Wi-Fi signal or Bluetooth signal, for example.

Thus, with the present technique electronic data representative of an electronic ticket may be obtained by a user of a terminal device 105 and stored in a storage medium 108 of the terminal device following a purchase of that electronic ticket by the user at a POS device 100. In an embodiment, the purchase is carried out by the user of the terminal device 105 using a suitable NFC payment service such as Contactless EMV ^{®} (see https://www.emvco.com/emv-technologies/contactless/ for access to the Contactless EMV ^{®} specifications).

Following a successful transaction, the digital data representative of the electronic ticket is transferred to the terminal device 105 over the same communication interfaces 101 and 106 used for completing the electronic payment. The data received by the terminal device 105 is provided with a digital signature generated using the digital ticket data and the first data (e.g. electronic payment card number) indicative of the user of the terminal device 105 previously transmitted to the POS device 100. The digital signature may be created by, for example, combining the data representative of the electronic ticket with data indicative of the user of the terminal device 105 (such as the number of the electronic payment card used to pay for the ticket) and applying a hash to the combined data. The hash is then encrypted using a private key known only to the POS device 100. The encrypted hash (which is the digital signature is then provided with the ticket data transmitted from the POS device 100 to the terminal device 105). It is noted that the generation of the digital signature is carried out by the controller 102.

When the user of the terminal device 105 then tries to gain access to a ticketed service using the electronic ticket data, the terminal device 105 must transmit the electronic ticket data, digital signature and user data (e.g. payment card number) to the checking device 111, which performs a verification process on the digital signature. The verification process comprises, for example, hashing the received electronic ticket data and user data (using the same hashing algorithm as used by the POS device 100) and decrypting the digital signature using a public key complementing the private key used by the POS device 100 to perform the encryption. The digital signature will be verified if the hash generated by the hashing algorithm on the ticket data and user data and the hash generated as a result of the decryption process are the same (that is, they match). Such an arrangement ensures both that the electronic ticket data is authentic (that is, has been generated by a POS device 100 authorised to generate electronic ticket data) and has not been tampered with. This is because the generated hashes will only match if the electronic ticket data has not been changed and if the private key (known only to authorised POS devices 100) is used to encrypt the hash generated at the POS device in order to generate the digital signature. It is noted that, in the above-mentioned embodiments, the first data indicative of the user of a terminal device 105 (e.g. payment card number) is stored in the storage medium 108 of the terminal device 105 in advance. For example, if the first data indicative of the user of the terminal device 105 is an electronic payment card number of an electronic payment card held by the user of the terminal device 105, then the user will have entered this information prior to initiating the transaction between the POS device 100 and terminal device 105. According to the invention, this stored user data is then transmitted to the POS device 100 (in order to generate the digital signature) and checking device 111 (in order to check the digital signature).

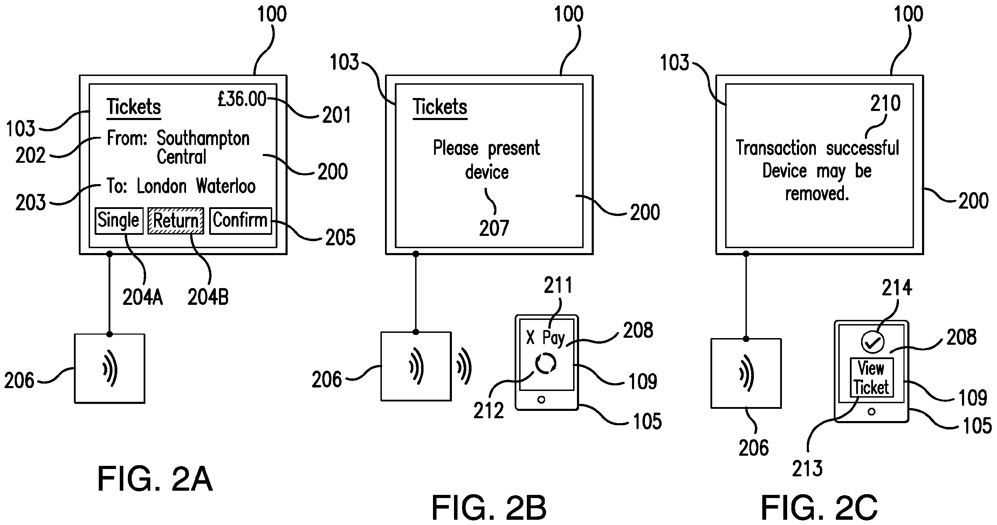

An embodiment of the present technique is described in more detail with reference to Figures 2A-2C. This shows an example scenario in which an electronic train ticket is purchased and stored on the terminal device 105. The electronic ticket is then checked by a checking device 111 and the authenticity and integrity of the electronic ticket may be confirmed based on the digital signature provided with the ticket.

Figure 2A shows a first step in a process in which the user of a terminal device 105 purchases an electronic railway ticket at a POS device 100. The POS device 100 comprises an NFC reader 206 comprising the communication interface 101. The display 103 of the POS device 100 displays an image 200 in which information is displayed to the user so as to allow them to select an appropriate ticket. In this case, the display 103 is a touchscreen display and therefore also comprises the user interface 104. That is, both the display and user interface together form a single element, which will be referred to as a touchscreen display. In the image 200, it can be seen that the starting location 202 (in this case "Southampton Central") and destination location 203 (in this case, "London Waterloo") are displayed. The starting and destination locations will be selected by a user by typing in appropriate information using an onscreen keyboard (not shown) or by using a dropdown menu (not shown) or the like. Virtual buttons 204A and 204B allow the user to select whether a single (one way) ticket is desired (selectable by selecting the button 204A) or whether a return ticket (selectable by selecting the button 204B) is desired. In this case, the user has selected a "return" ticket by selecting the button 204B. The button 204B therefore appears in a different colour to the button 204A in order to indicate that a return ticket (rather than a single ticket) has been selected. The price 201 of the selected ticket is also shown on the display 103. Once the user is happy with the selection of the details of the ticket, they select the confirm button 205. The virtual buttons 204A, 204B and 205 are selected by the user touching the touchscreen display 103 at the position at which the desired button is displayed on the display 103.

The process then proceeds to the next step, shown in Figure 2B. Here, the image 200 shown on the display 103 presents a message 207 to the user instructing them to present a terminal device 105 to the card reader 206. The user then brings the terminal device 105 into sufficient proximity to the reader 206 in order for data to be transmitted between the communication device 101 (comprised within the reader 206) and the communication interface 106 (comprised within the terminal device 105) via NFC. In response to the terminal device 105 being brought into sufficient proximity to the reader 206, the communication interface 106 of the terminal device 105 receives an NFC signal from the reader 206 which instructs the controller 107 to open a predetermined software application for carrying mobile NFC payments. An image 208 is displayed on the display 109 of the terminal device 105, the image 208 showing a graphical user interface (GUI) of the NFC mobile payments application (this may be referred to as a "payments "app). The GUI of the payments app shows a name 211 of the app and also displays a symbol 212 indicating that the NFC payments process is currently being completed. The NFC payments process typically takes a time of the order of a few seconds. During the NFC payments process, payment information is exchanged between the POS device 100 and the terminal device 105 in order for an electronic payment card payment for the purchased ticket to be completed. As previously mentioned, an example of such a mobile NFC payment scheme is that provided by EMV ^{®} Contactless. The details of EMV ^{®} Contactless are known in the art (e.g. in the publicly available EMV ^{®} Contactless specifications mentioned above) and a detailed description of EMV ^{®} is beyond the information necessary for the skilled person to understand the principles of the present technique. For the sake of brevity, the details of EMV ^{®} Contactless are therefore not included in this description. In addition to the exchange of payment information, once the payment process has been completed, data representing the electronic ticket and digital signature is transmitted from the POS device 100 to the terminal device 105 via NFC. Once both the payment has been completed successfully and the electronic ticket (with digital signature) has been successfully received by the terminal device 105, the process proceeds to the next step illustrated in Figure 2C.

In Figure 2C, a message 210 indicating that the transaction has been successful and the terminal device 105 may therefore be removed from the proximity of the EMV ^{®} reader is shown in the image 200 displayed by the display 103 of the POS device 100. Furthermore, the image 208 displayed on the display 109 of the terminal device 105 has changed to display a check mark 214 indicating that the transaction has been successful and to display a virtual button 213 which the user may select in order view the electronic ticket that they have just purchased (more specifically, to view an image generated on the basis of the data representative of the purchased electronic ticket). Again, in this case, the user interface 110 of the terminal device 105 is a touchscreen user interface implemented as part of the display 109. The display 109 and user interface 110 of the terminal device 105 therefore form a single unit which may be referred to as a touchscreen display.

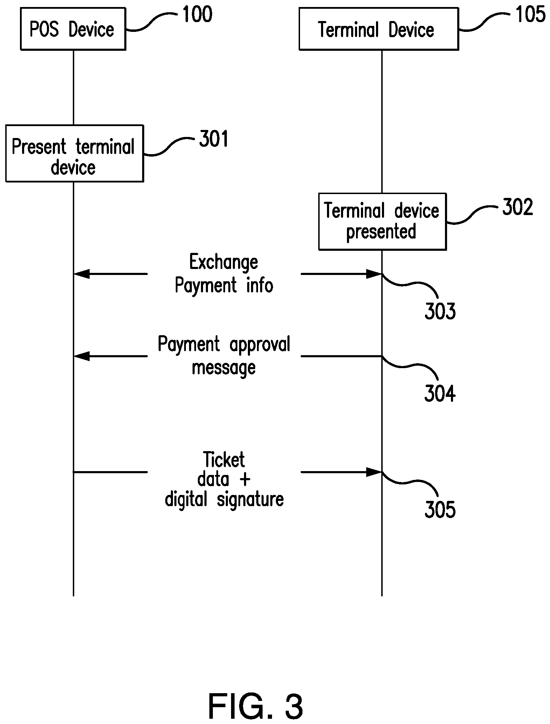

Figure 3 shows in more detail an example of the signals transmitted via NFC between the POS device 100 and terminal device 105 during the step of Figure 2B. At a first step 301, the user of the terminal 105 is requested by the POS device 100 to present the terminal device 105 to the reader 206 of the POS device 100. At step 302, the user presents the terminal device 105 to the NFC reader 206 (that is, the user brings the terminal device 105 into sufficient proximity to the reader 206 so as to enable signals to be exchanged between the communication interface 106 of the terminal device and the communication interface 101 of the NFC reader 206 via NFC). Once the NFC reader 206 of the POS device 100 and terminal device 105 are brought into sufficiently close proximity, payment information is exchanged between the POS device and terminal device at step 303. The payment information exchanged comprises all information which must be exchanged between the POS device 100 and the terminal device 105 in order to enable an electronic payment card payment (using the details of an electronic payment card held by the user of the terminal device 105 which are stored as data in the storage medium 108 of the terminal device 105) to be made to the operator of the POS device 100. The payment information exchanged therefore includes, for example, data indicative of the value of the payment (in this case, £36), the details of the electronic payment card stored in the storage medium 108 of the terminal device 105 and any other data so as to enable the electronic card payment to be made using an electronic payments network including an acquirer, an electronic payment card scheme (such as a MasterCard ^{®} electronic payment card scheme) and an issuer of the payment card (such as terminal device user's bank). The exact details of the content of the electronic messages exchanged between the POS device 100 and the terminal device 105 are defined, for example, in the EMV ^{®} Contactless specifications described above. For the sake of brevity, this information is not repeated here.

At step 304, a payment approval message is transmitted from the terminal device 105 to the POS device 100. Such a payment approval message 304 is the final instance of payment information that must be exchanged between the POS device 100 and terminal device 105 in order for the electronic card payment to be completed successfully. When the electronic payment is completed using EMV ^{®} Contactless, the payment approval message step 304 comprises a transaction certificate (TC) application cryptogram transmitted from the terminal device 105 to the POS device 100 in response to a "generate application cryptogram" (Gen AC) command transmitted from the POS device 100 to the terminal device 105. The transaction certificate approving the electronic payment card payment is only transmitted from the terminal device 105 to the POS device 100 in the case that sufficient card holder verification is completed at the terminal device 105. Such card holder verification may include, for example, the user entering a passcode into the terminal device 105, or may utilise biometric verification such as fingerprint recognition (in which case, the terminal device 105 comprises a fingerprint scanner, not shown) or facial recognition (in which case, the terminal device 105 comprises a camera and suitable software and/or hardware for recognising the facial features of the user of the terminal device 105, not shown). In embodiments, when online approval of the payment is required by the issuer of the electronic payment card used by the terminal device 105 for instructing the payment, the payment approval message transmitted at step 304 is transmitted only in response to a second Gen AC command transmitted from the POS device 100 to the terminal device 105 in response to approval of the transaction of the issuer of the electronic payment card.

Following the receipt of the payment approval message, the data representative of the electronic ticket is transmitted from the POS device 100 to the terminal device 105 at step 305. As previously mentioned, the ticket data is provided along with an electronic signature generated on the basis of the electronic payment card number (e.g. PAN number) of the electronic payment card used during the payment procedure of step 303 and the ticket data itself. The POS device 100 knows the electronic payment card number of the electronic payment card used for payment because this is received from the terminal device 105 during the exchange of payment information at step 303. The digital signature provided with the ticket data can therefore only be verified if the ticket data and data indicative of the user of the terminal device 105 (in this case, the electronic payment card number) remain unchanged. This prevents a user of the terminal device 105 from editing the ticket data in order to allow unauthorised access to a ticketed service for which they have not purchased a ticket via official means. Furthermore, a user of a first terminal device cannot transfer legitimately obtained ticket data to another terminal device used by another user, since the user of the other terminal device must use a different electronic payment card for NFC mobile payments and therefore the combination of the ticket data and electronic payment card number used for generation of the digital signature will be different when the ticket data is transmitted from one terminal device to another (thus resulting in the digital signature of the ticket data not being verifiable when read from a terminal device other than the terminal device to which the ticket data was originally issued). In addition, the digital signature ensures the authenticity of the ticket data (that is, that the ticket data was created by a POS device 100 of an official ticket vender with access to the private key for encrypting the hash of the combination of the ticket data and electronic payment card number in order to generate the digital signature, as previously discussed).

In an embodiment, the ticket data and digital signature are stored in the storage medium 108 of the terminal device 105 as part of a predetermined record. The ticket data and digital signature are comprised within an update record command transmitted from the POS device 100 to the terminal device 105 during step 305 shown in Figure 3. According to Contactless EMV ^{®}, various types of data necessary for completing a mobile payment transaction using a terminal device 105 are stored within records stored in the storage medium 108. Data stored within a particular record may be changed via an update record command transmitted from an EMV ^{®} Contactless reader to the terminal device. By storing the ticket data and digital signature as part of a predetermined one of these records, it is possible for electronic tickets be transmitted to and stored by terminal devices 105 using existing EMV ^{®} Contactless readers and existing EMV ^{®} architecture comprised within terminal devices 105 such as smartphones and tablet computers. The present technique therefore provides improved functionality to existing POS and terminal devices by allowing electronic tickets to be quickly and conveniently acquired by and stored within existing terminal devices whilst helping to ensure the authenticity and integrity of those electronic tickets.

When the ticket data and digital signature are transmitted to the terminal device 105 as part of an update record command, it is noted that existing EMV ^{®} architecture may require a message authentication code (MAC) to be included in the update record command. The MAC is for ensuring the authenticity and integrity of the content of the update record command. The use of MACs is known in the art and will therefore not be discussed in detail. However, with the present technique, as previously discussed, the update record command already comprises the digital signature of the ticket data. The authenticity and integrity of the ticket data can therefore already be confirmed based on verification of the digital signature. The inclusion of a MAC in the update record command used for transmitting the ticket data and digital signature from the POS device 100 to the terminal device 105 is therefore not required. The MAC may therefore be omitted from the update record command used to transmit the ticket data and digital signature. This reduces the amount of data which must be transmitted and processed when the update record command is transmitted from the POS device 100 to the terminal device 105. Alternatively, if the EMV ^{®} architecture of the POS device 100 and/or terminal device 105 requires data to be included in a portion of the structure of the update record command which usually comprises the MAC, then any combination of bits may be included within this portion of the update record command (in place of a MAC). The authenticity and integrity of the ticket data comprised within the update record command may therefore still be confirmed by verification of the digital signature. At the same time, the data structure of the update record command is maintained, thus ensuring continued compatibility of the present technique with EMV ^{®} architectures which require update record commands to include data in the potion of the update record command structure in which a MAC is usually comprised.

It will be appreciated that, even though the ticket data may be authenticated and the integrity of the ticket data confirmed based on a verification of the digital signature, it may still nonetheless be beneficial to include a MAC in the update record command comprising the ticket data and digital signature. In particular, a MAC may be different for each update record command transmitted (e.g. by using a different session key shared between the POS device 100 and terminal device 105 for each update record command), meaning that old ticket data comprising an old MAC cannot be rewritten in the storage medium 108 once the MAC has changed (because the old MAC included in the update record command will not verify). This provides a convenient method for ensuring that old electronic ticket data cannot be reused. Furthermore, this is achieved using a type of data (i.e. the MAC) which already exists in update record commands transmitted using existing EMV ^{®} architecture.

Instead of or in addition to including a MAC in the update record command comprising the ticket data and digital signature, the ticket data itself may comprise information indicative of the temporal validity of the ticket data. For example, the ticket data may comprise an expiry date and/or time of the ticket data, after which the ticket data will be deemed valid and will not be accepted by the checking device 111. Due to the digital signature verification, it will not be possible for a user to change the validity data of the ticket data (since to do so would result in the ticket data being changed which would, in turn, result in it not being possible to successfully verify the digital signature).

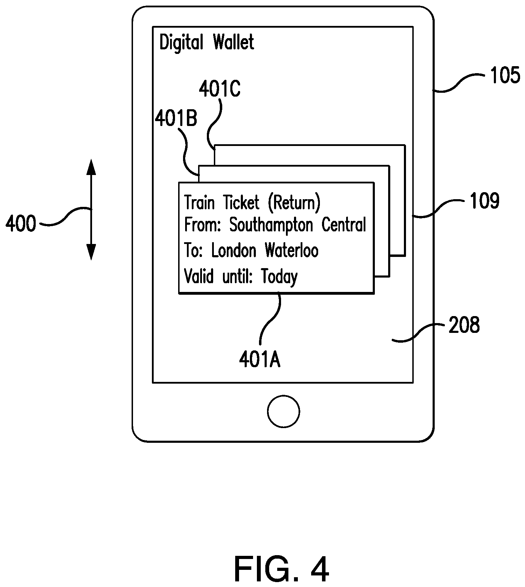

Figure 4 shows the image 208 after the virtual button 213 (shown in Figure 2C) is selected by the user of the terminal device 105. The image 208 shows a GUI of a digital wallet software application which shows a plurality of images 401A-401C each representative of a respective electronic ticket purchased by the user in accordance with the previously described embodiments. The railway ticket purchased according to the embodiment described with respect to Figures 2A-2C and Figure 3 is shown at the front of the plurality of images, thus allowing the user of the terminal device 105 to see all of the details of the railway ticket. Each of the images 401A-401C provides visual information in order to allow the user to determine details of the electronic ticket to which that image relates. The image relating to each saved instance of electronic content data comprises visual information which allows the user to distinguish each ticket stored in the storage medium 108 and to determine any other relevant information such as the validity of that ticket. For example, as shown in Figure 4, the electronic railway ticket purchased according to the embodiment discussed with reference to Figures 2A-2C and Figure 3 indicates that the electronic ticket is a train tciket, that the ticket is a "return" ticket rather than a "single" (that is, one way) ticket, the start and end locations for which the electronic ticket is valid and the temporal validity of the electronic ticket (in this case, the ticket is valid for the current day only, and therefore the image 401A indicates that the ticket is valid "today"). It will be appreciated that, in addition to electronic tickets, images relating to other types of electronic content purchased using the principles of the present technique may be displayed using a GUI similar to that shown in Figure 4.

In the arrangement of Figure 4, the user is able to conveniently store a plurality of electronic tickets (e.g. railway tickets, bus tickets, cinema tickets, theatre tickets, airline boarding passes and the like) in the storage medium 108 of the terminal device 105 and to review the digital content items which are stored in the storage medium 108 via the GUI of a digital wallet software application which displays an image 401A-401C representative of each electronic ticket stored in the storage medium 108. In the embodiment of Figure 4, each of the images 401A-401C are shown to be virtually stacked on top of each other so that a currently selected image (in this case, image 401A) appears at the top of the stack. In this embodiment, the user interface 110 is a touch sensitive interface comprised as part of the display 109 (the display 109 is therefore a touch screen display). When the user touches the surface of the display 109 with their finger and moves their finger up or down in the direction of the arrows 400, the image shown at the top of the image stack is changed so as to enable the user to view the details associated with different ones of the electronic tickets stored in the storage medium 108. For example, if the user touches the surface of the display and moves their finger in the direction of the downwards facing arrow, the image displayed at the top of the stack will change from the image 401A to the image 401B. If the user then moves their finger in the direction of the downwards facing arrow by a further amount, then the image shown at the top of the stack will change from the image 401B to the image 401C. Alternatively, instead of moving their finger down, if the user were to move their finger in the direction of the upwards facing arrow, then the image at the top of the stack would change from the image 401A to the image 401C. If the user were to then move their finger in the direction of the upwards facing arrow by a further amount, then the image at the top of the stack would change from the image 401C to the image 401B. The user is thus able to easily select the details of a particular electronic ticket to view. It will be appreciated that the arrangement of Figure 4 is only an example, and that any other suitable method of displaying data associated with different respective electronic tickets (or, more generally, different respective items of electronic content) stored in the storage medium 108 of the terminal device 105 may be used.

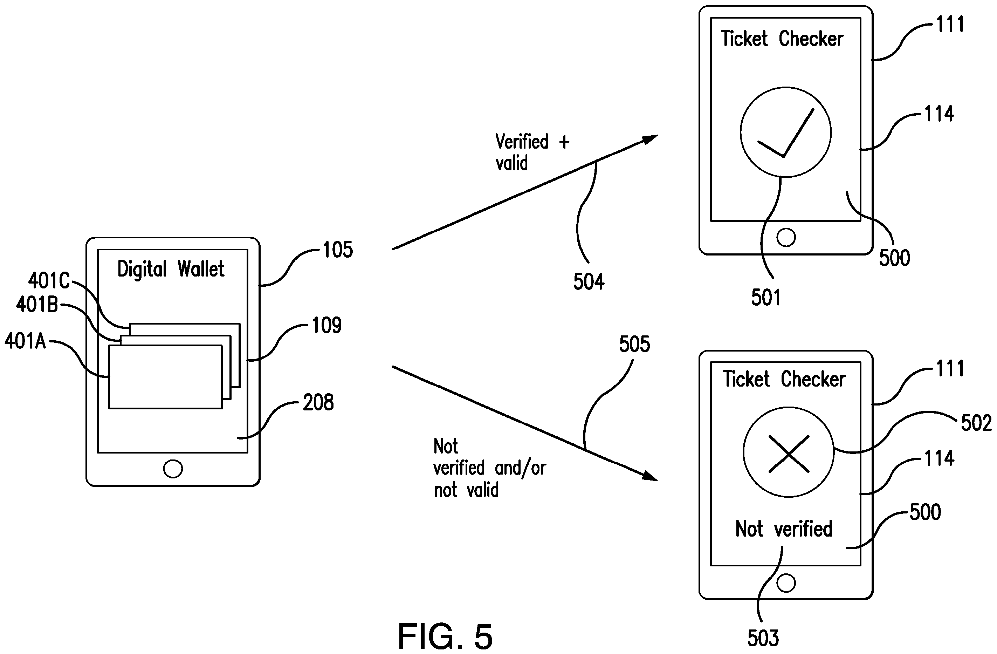

Figure 5 shows an example arrangement in which the authenticity, integrity and validity of an electronic ticket stored in the storage medium 108 of the terminal device 105 is checked by a checking device 111.

It can be seen that the terminal device 105 and the image 208 displayed on the display 109 of the terminal device 105 (including images representative of different respective electronic tickets) is the same as described with reference to Figure 4. Figure 5, in addition, shows a ticket checker 111 comprising a display 114 which displays an image 500. In this example, the checking device 111 is also a terminal device such as a smartphone or tablet computer in which the functionality of the device is implemented by a software application installed on the terminal device.

As previously described, the checking device 111 is able to determine whether or not an electronic ticket (or, more generally, electronic content) stored on the terminal device 105 is authentic (that is, genuine) and has maintained its integrity (that is, has not been altered) by verifying the digital signature provided with the electronic ticket. As previously mentioned, the digital signature is checked by the checking device receiving the ticket data and data indicative of the user of the terminal device 105 (such as the payment card number of an electronic payment card used by the user of a terminal device 105 to purchase the electronic ticket), hashing the combination of the ticket data and user data using a predetermined hashing algorithm and comparing the hash generated from the predetermined hashing algorithm with a hash generated by decrypting the digital signature provided with the ticket data using a public key which complements the private key used for encrypting the hash of the ticket data and user data by the POS device 100 in order to generate the digital signature.

As shown in Figure 5, there are two possible outcomes resulting from the operation of a checking device 111.

In a first outcome indicated by arrow 504, the electronic ticket is deemed to be genuine and unaltered (due to successful verification of the digital signature) and valid (due to the ticket being valid for the service with which the checking device 111 is associated and being temporally valid). In this case, an image 500 shown on the display 114 of the ticket checker 111 shows a symbol 501 (in this case, a check mark) indicating that the electronic ticket is genuine, unaltered and valid.

On the other hand, a second outcome, indicated by arrow 505, occurs when the electronic ticket is not genuine, has been altered and/or is not valid. The electronic ticket is determined to not be genuine or to have been altered when the digital signature fails to verify (that is, when the hash of the combination of the ticket data and user data does not match the hash generated from the decryption of the digital signature). The ticket will not be valid if it is not valid for the service associated with the checking device 111 (e.g. if the user of the terminal device 105 travels on a different train to that to which they are entitled according to the terms and conditions of their electronic train ticket) or if the ticket is not temporally valid (that is, it has expired or is not valid for use until a certain point in the future). In this case, the image 500 displayed on the display 114 of the checking device 111 comprises a symbol 502 (in this case, a cross mark) indicating that the electronic ticket data cannot be accepted. In addition, a message 503 is displayed as part of the image 500 to indicate whether the ticket has been rejected because the digital signature failed to verify (as is the case here) or because the ticket is not valid. In this case, the digital signature has failed to verify (indicating that the ticket is not genuine and/or has been altered) and therefore the ticket is indicated by the message 503 as not being verified. However, it will be appreciated that, in another scenario, the ticket may be genuine and unaltered (thus allowing the digital signature to be verified) but may not be valid (for example, the ticket may have expired, may not yet be temporally valid or may not be appropriate for the service associated with the checking device 111). In this case, the message 503 would indicate that the ticket is not valid. In an embodiment, the verification of the ticket is carried out first. The validity of the ticket is then checked only upon successful verification of the ticket, since the validity of a ticket is irrelevant if it cannot be verified. This reduces the amount of processing required in checking tickets which cannot be verified.

An example of the scenario shown in Figure 5 may occur, for example, for railway tickets. In this case, if electronic ticket data has been genuinely generated by a POS device 100 associated with the railway operator and has not been altered (e.g. by the user of the terminal device 105 attempting to change the ticket data), then the digital signature provided with the electronic ticket data will be verified. Furthermore, if the electronic ticket is appropriate for the train being used by the user (to use the example of the railway ticket shown in Figures 2A-2C, Figure 3 and Figure 4, if the user is on a train between Southampton central and London Waterloo and is travelling on the same day on which the ticket has been purchased), then the scenario indicated by arrow 504 will occur. On the other hand, if the ticket is not genuine (for example, if the ticket data has simply been copied from another device associated with a different user), has been altered (for example, if the user has amended the ticket data to change the destination or validity) or is not valid (for example, if the user is travelling on a train on a route other than a route between Southampton Central and London Waterloo or if the user is travelling on a day after the day on which the ticket was purchased), then the scenario indicated by arrow 505 will occur. As previously mentioned, the ticket data, user data (e.g. payment card number) and digital signature may be transmitted from the communication interface 106 of the terminal device 105 to the communication interface 112 of the checking device 111 via any suitable data transmission method, including via electromagnetic induction (as enabled by NFC technology, for example) or via a radio signal (as enabled by Bluetooth or Wi-Fi technology, for example).

Thus, in embodiments of the present technique, electronic ticket data (or data indicative of other electronic content whose authenticity must be checked) and data indicative of a user (that is, data such as an electronic payment card number of an electronic payment card held by the user which may be used to identify the user) is used by the POS device 100 to generate a digital signature which is then provided with the electronic ticket data to the terminal device 105 for storage in the storage medium 108 of the terminal device 105. The user data (such as the electronic payment card number) is transmitted to the POS device 100 from the terminal device 105 in order to allow the digital signature to be generated. When the electronic ticket data is later checked by a checking device 111, the ticket data and user data (such as the electronic payment card number) used to generate the digital signature is transmitted to the checking device 111 together with the digital signature. This allows the checking device 111 to verify the digital signature in order to confirm the authenticity and integrity of the electronic ticket data. The checking device 111 may then also check data indicative of the validity of the ticket data (such as whether the ticket is appropriate for the service with which the checking device 111 is associated and whether the electronic ticket data is temporally valid) in order to determine whether or not to accept the ticket.

In the embodiment of Figure 5, in the scenario 504 in which the electronic ticket is accepted (a ticket being accepted when it is both verified and valid), the controller 113 may control the data output circuitry 115 to output a signal to another device (such as an automated ticket barrier, not shown) indicating that the electronic ticket has been accepted and therefore that a first predetermined process (in addition to or instead of the display 114 being controlled to indicate that the electronic ticket has been accepted) should be performed. For example, in the case that such a further device is an electronic ticket barrier (in which case, the checking device 111 may be comprised as part of the electronic ticket barrier, for example), then the signal output by the data output circuitry 115 may be a signal indicating to the automated ticket barrier to allow a user through the automated ticket barrier (automated ticket barriers, not shown, typically comprise electronically controlled gates which serve to prevent a user from entering a predetermined location (such as a railway platform or event premises) unless they have a valid ticket). On the other hand, in the scenario indicated by arrow 505, the data output circuitry 115 may be controlled to output a signal to another device indicating that the electronic ticket has been rejected (a rejected ticket being not verified and/or not valid) and therefore that a second predetermined process (in addition to or instead of the display 114 being controlled to indicate that the electronic ticket has been rejected) should be performed. For example, a signal may be output to an automated ticket barrier indicating that the user of the terminal device 105 should not be allowed access. In this case, the electronically control gates of the automated ticket barrier will remain closed, thus preventing a user without a genuine, unaltered and/or valid electronic ticket access to the ticketed service. It is noted that, in embodiments, the term "altered" should be understood to mean any alteration of the ticket data, whether this alteration is intentional (e.g. caused by a user attempting to change details of the electronic ticket) or accidental (e.g. caused by corruption of the ticket data during transmission between devices). The verification process of the present technique ensures that any alteration to the ticket data, whether intentional or accidental, may be detected (because the digital signature provided with the ticket will fail to verify).

It will be appreciated that, although the above-described embodiments relate to an electronic ticket (in particular, an electronic railway ticket), the present technique may be applied to any data which is stored in a storage medium 108 of a terminal device 105 and whose authenticity and integrity must be checked. For example, other types of electronic ticket data (for example, cinema tickets, theatre tickets or music event tickets) may be verified according to the present technique, as may other types of electronic content such as media content (for example, image, video, audio, game or textual files). More generally, it will be appreciated that the present technique may be used for authenticating any type of electronic content obtained by a terminal device 105 from a POS device 100 via electromagnetically inductive interaction between the terminal device 105 and POS device 100.

It is noted that an electronic ticket with a digital signature which is successfully verified may be referred to as a verified electronic ticket. A verified electronic ticket is known to be both authentic (that is, genuine) and to have maintained its integrity (that is, the data representing the electronic content has not been altered). An electronic ticket that is not verified is either not authentic or has comprised integrity. In addition, an electronic ticket which, based on the data representative of the ticket (including the ticket's temporal validity and information indicative of the ticketed service for which the ticket is valid), is valid for a ticketed service that the user of the terminal device 105 attempts to access, may be referred to as a valid electronic ticket. On the other hand, an electronic ticket which, based on the data representative of the ticket (including the ticket's temporal validity and information indicative of the ticketed service for which the ticket is valid), is not valid for a ticketed service that the user of the terminal device 105 attempts to access, may be referred to as an invalid electronic ticket. A ticket will be accepted by the checking device 111 when both verified and valid (in which case the controller 113 of the checking device 111 outputs a signal to the display 114 and/or data output circuitry 115 indicating that the ticket is both verified and valid). This is exemplified by scenario 504 of Figure 5. On the other hand, a ticket will not be accepted by the checking device 111 if it is not verified and/or not valid (in which case the controller 113 of the checking device 111 outputs a signal to the display 114 and/or data output circuitry 115 indicating that the ticket is not verified and/or not valid). This is exemplified by scenario 505 in Figure 5.

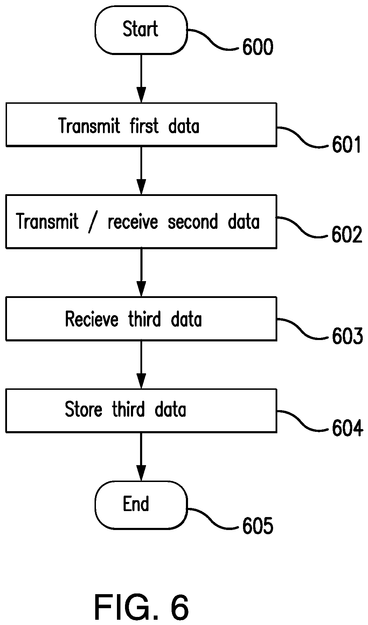

Figure 6 shows a method of controlling the terminal device 105 according to an embodiment. This method is implemented by the controller 107, for example. The method starts at step 600. At step 601, when the terminal device 105 is brought into proximity to the POS device 100, the communication interface 106 is controlled to transmit first data indicative of a user of the terminal device 105 (e.g. an electronic payment card number) to the POS device 100. At step 602, the communication interface 106 is controlled to transmit second data to or receive second data from the POS device 100, the transmission or reception of the second data occurring in response to the completion of a predetermined data processing event (e.g. completion of an electronic payment card payment). At step 603, the communication interface 106 is controlled to receive third data (e.g. an electronic ticket) from the POS device 100, the third data being received in response to the completion of the predetermined data processing event and being digitally signed by the POS device 100, wherein the digital signature of the third data is generated using the first data and the third data. At step 604, the third data is stored in the storage medium 108. The method then ends at step 605.

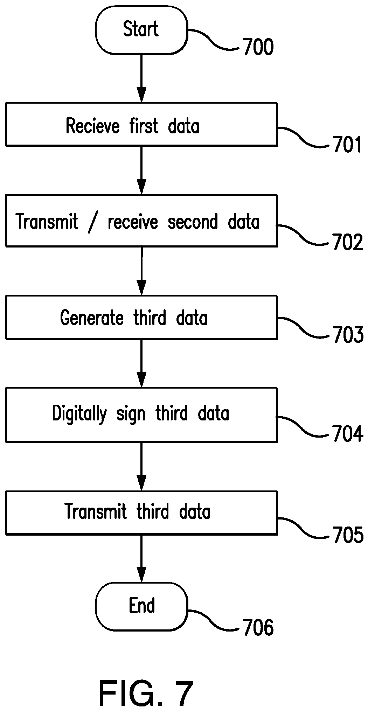

Figure 7 shows a method of controlling the POS device 100 according to an embodiment. This method is implemented by the controller 102, for example. The method starts at step 700. At step 701, the communication interface 101 is controlled to receive first data indicative of a user of the terminal device 105 (e.g. an electronic payment card number) from the terminal device 105. At step 702, the communication interface 101 is controlled to transmit second data to or receive second data from the terminal device 105, the transmission or reception of the second data occurring in response to the completion of a predetermined data processing event (e.g. completion of an electronic payment card payment). At step 703, in response to the completion of the predetermined data processing event, third data (e.g. an electronic ticket) is generated. At step 704, the third data is digitally signed using the first data and third data. At step 705, the communication interface 101 is controlled to transmit the digitally signed third data to the terminal device 105. The method then ends at step 706.

Figure 7 shows a method of controlling the checking device 111 according to an embodiment. This method is implemented by the controller 113, for example. The method starts at step 800. At step 801, the communication interface 112 is controlled to receive first data from the terminal device 105, the first data (e.g. an electronic payment card number) being indicative of a user of the terminal device 105, and to receive second data (e.g. an electronic ticket) from the terminal device, the second data being previously received by the terminal device 105 in response to the completion of a predetermined data processing event (e.g. completion of an electronic payment card payment). The second data is digitally signed using the first data and second data. At step 802, a verification process of the digital signature of the second data is performed. At step 803, it is determined whether the digital signature was successfully verified. In response to a successful verification of the digital signature of the second data, the process proceeds to step 805 in which, based on information indicative of a validity of the second data comprised within the second data, a validity checking process is carried out on the second data. At step 806, it is determined whether the second data was found to be valid. In response to determining that the second data is valid, the process proceeds to step 808, in which a signal indicating that the second data is accepted (that is, both verified and valid) is output (e.g. to the display 114 and/or data output circuitry 115 for a signal indicating that the second data is acceptable to be output to an external device). The process then ends at step 809. On the other hand, in response to determining that the second data is not valid, the process proceeds to step 807 in which a signal indicating that the second data is not valid is output (e.g. to the display 114 and/or to the data output circuitry 115 so as to allow a signal indicating that the second data is not valid to be output to an external device). The process then ends at step 809. Alternatively, in response to an unsuccessful verification of the digital signature of the second data at step 803, the process proceeds to step 804, in which a signal indicating that the digital signature of the second data has not been verified is output (e.g. to the display 114 and/or to the data output circuitry 115 so as to allow a signal indicating that the second data has not been verified to be output to an external device). The process then ends at step 809.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A first data processing apparatus (105) comprising:
communication circuitry (106) configured to transmit data to or receive data from a second data processing apparatus (100) using electromagnetic induction when the first data processing apparatus is brought into proximity to the second data processing apparatus (100);
a storage medium (108); and
processing circuitry (107) configured:
to control the communication circuitry to transmit first data indicative of a user of the first data processing apparatus (105) to the second data processing apparatus (100), wherein the first data is an electronic payment card number indicative of an electronic payment card of the user of the first data processing apparatus (105);
to control the communication circuitry to transmit second data to or receive second data from the second data processing apparatus (100), the transmission or reception of the second data occurring in response to the completion of a predetermined data processing event, wherein the predetermined data processing event is an electronic payment card payment made by the user of the first data processing apparatus (105) to a user of the second data processing apparatus (100) using the payment card number, wherein the payment is carried out between the first and second data processing apparatuses (105, 100) for the purpose of obtaining an electronic ticket, and wherein the second data comprises a payment approval message transmitted from the first data processing apparatus (105) to the second data processing apparatus (100);
to control the communication circuitry to receive third data from the second data processing apparatus (100), the third data being received in response to the completion of the predetermined data processing event and following receipt of the payment approval message by the second data processing apparatus (100), and the third data comprising electronic ticket data and a digital signature generated by the second data processing apparatus (100), wherein the digital signature of the third data is generated using the first data and the electronic ticket data; and
to store the received third data in the storage medium for subsequent transmission to a third data processing apparatus (111) for use in performing a verification process on the digital signature;
wherein the received third data is comprised within a command to store the third data in the storage medium as part of a predetermined record.

2. A first data processing apparatus according to claim 1, wherein the electronic ticket data allows the user of the first data processing apparatus to use a predetermined service.

3. A first data processing apparatus according to claim 1 or claim 2, wherein the command comprising the third data corresponds to an update record command transmitted from the second data processing apparatus, wherein the update record command is configured to change data stored as part of the predetermined record.

4. A first data processing apparatus according to claim 3, wherein the update record command further comprises a message authentication code.

5. A first data processing apparatus according to any preceding claim, wherein the received third data comprises information indicative of a validity of the third data.

6. A first data processing apparatus (100) comprising:
communication circuitry (101) configured to transmit data to or receive data from a second data processing apparatus (105) using electromagnetic induction when the second data processing apparatus is brought into proximity to the first data processing apparatus (100); and
processing circuitry (102) configured:
to control the communication circuitry to receive first data indicative of a user of the second data processing apparatus from the second data processing apparatus (105), wherein the first data is an electronic payment card number indicative of an electronic payment card of the user of the second data processing apparatus (105);
to control the communication circuitry to transmit second data to or receive second data from the second data processing apparatus (105), the transmission or reception of the second data occurring in response to the completion of a predetermined data processing event, wherein the predetermined data processing event is an electronic payment card payment made by the user of the second data processing apparatus (105) to a user of the first data processing apparatus (100) using the payment card number, wherein the payment is carried out between the first and second data processing apparatuses (100, 105) for the purpose of obtaining an electronic ticket, and wherein the second data comprises a payment approval message transmitted from the second data processing apparatus (105) to the first data processing apparatus (100);
in response to the completion of the predetermined data processing event, to generate third data comprising electronic ticket data and a digital signature, the digital signature being generated using the first data and the electronic ticket data; and
following receipt of the payment approval message from the second data processing apparatus (105), to control the communication circuitry to transmit the third data to the second data processing apparatus (105) for storage in a storage medium and subsequent transmission to a third data processing apparatus (111) for use in performing a verification process on the digital signature; wherein the transmitted third data is comprised within a command to store the third data in the storage medium as part of a predetermined record.

7. A first data processing apparatus (111) comprising:
communication circuitry (112) configured to receive first data from a second data processing apparatus (105), the first data being indicative of a user of the second data processing apparatus (105), and to receive second data from the second data processing apparatus (105), the second data being previously received by the second data processing apparatus (105) in response to the completion of a predetermined data processing event and following transmission of a payment approval message by the second data processing apparatus (105), and the second data comprising electronic ticket data and a digital signature, the digital signature being generated using the first data and the electronic ticket data; and
processing circuitry (113) configured:
to perform a verification process of the digital signature of the second data using the received first data,
in response to a successful verification of the digital signature of the second data, to output a signal indicating that the digital signature of the second data has been verified; and
in response to an unsuccessful verification of the digital signature of the second data, to output a signal indicating that the digital signature of the second data has not been verified; wherein:
the predetermined data processing event is an electronic payment card payment made by the user of the second data processing apparatus (105) to a user of a third data processing apparatus (100) using the first data; wherein the first data is an electronic payment card number indicative of an electronic payment card of the user of the second data processing apparatus (105); and wherein the payment is carried out between the second and third data processing apparatuses (105, 100) for the purpose of obtaining an electronic ticket; and wherein the transmitted second data was comprised within a command to store the second data in a storage medium of the second data processing apparatus (105) as part of a predetermined record.

8. A method (600) of operating a first data processing apparatus (105) comprising communication circuitry (107) for transmitting data to or receiving data from a second data processing apparatus (100) using electromagnetic induction when the first data processing apparatus (105) is brought into proximity to the second data processing apparatus (100), and a storage medium (108), wherein the method comprises:
controlling (601) the communication circuitry to transmit first data indicative of a user of the first data processing apparatus (105) to the second data processing apparatus (100), wherein the first data is an electronic payment card number indicative of an electronic payment card of the user of the first data processing apparatus (105);
controlling (602) the communication circuitry to transmit second data to or receive second data from the second data processing apparatus (100), the transmission or reception of the second data occurring in response to the completion of a predetermined data processing event, wherein the predetermined data processing event is an electronic payment card payment made by the user of the first data processing apparatus (105) to a user of the second data processing apparatus (100) using the payment card number, wherein the payment is carried out between the first and second data processing apparatuses (105, 100) for the purpose of obtaining an electronic ticket, and wherein the second data comprises a payment approval message transmitted from the first data processing apparatus (105) to the second data processing apparatus (100);
controlling (603) the communication circuitry to receive third data from the second data processing apparatus (100), the third data being received in response to the completion of the predetermined data processing event and following receipt of the payment approval message by the second data processing apparatus (100), and the third data comprising electronic ticket data and a digital signature generated by the second data processing apparatus (100), wherein the digital signature of the third data is generated using the first data and the electronic ticket data; and
storing (604) the received third data in the storage medium for subsequent transmission to a third data processing apparatus (111) for use in performing a verification process on the digital signature; wherein the received third data is comprised within a command to store the third data in the storage medium as part of a predetermined record.

9. A method (700) of operating a first data processing apparatus (100) comprising communication circuitry (101) for transmitting data to or receiving data from a second data processing apparatus (105) using electromagnetic induction when the second data processing apparatus (105) is brought into proximity to the first data processing apparatus (100), wherein the method comprises:
controlling (701) the communication circuitry to receive first data indicative of a user of the second data processing apparatus from the second data processing apparatus (105), wherein the first data is an electronic payment card number indicative of an electronic payment card of the user of the second data processing apparatus (105);
controlling (702) the communication circuitry to transmit second data to or receive second data from the second data processing apparatus (105), the transmission or reception of the second data occurring in response to the completion of a predetermined data processing event, wherein the predetermined data processing event is an electronic payment card payment made by the user of the first data processing apparatus (100) to a user of the second data processing apparatus (105) using the payment card number, wherein the payment is carried out between the first and second data processing apparatuses for the purpose of obtaining an electronic ticket, and wherein the second data comprises a payment approval message transmitted from the second data processing apparatus (105) to the first data processing apparatus (100);
in response to the completion of the predetermined data processing event, generating (703) third data comprising electronic ticket data and a digital signature, the digital signature being generated (704) using the first data and the electronic ticket data; and
following receipt of the payment approval message from the second data processing apparatus, controlling (705) the communication circuitry to transmit the third data to the second data processing apparatus (105) for storage in a storage medium and subsequent transmission to a third data processing apparatus (111) for use in performing a verification process on the digital signature, wherein the third data is comprised within a command to store the third data in the storage medium as part of a predetermined record.

10. A method (800) of operating a first data processing apparatus (111) comprising communication circuitry (112), wherein the method comprises:
controlling (801) the communication circuitry to receive first data from a second data processing apparatus (105), the first data being indicative of a user of the second data processing apparatus, and to receive second data from the second data processing apparatus, the second data being previously received by the second data processing apparatus (105) in response to the completion of a predetermined data processing event and following transmission of a payment approval message by the second data processing apparatus (105), and the second data comprising electronic ticket data and a digital signature, the digital signature being generated using the first data and the electronic ticket data;
performing (802) a verification process of the digital signature of the second data using the received first data;
in response to a successful verification of the digital signature of the second data, outputting (808) a signal indicating that the digital signature of the second data has been verified; and
in response to an unsuccessful verification of the digital signature of the second data, outputting (804, 807) a signal indicating that the digital signature of the second data has not been verified;
wherein:
the predetermined data processing event is an electronic payment card payment made by the user of the second data processing apparatus (105) to a user of a third data processing apparatus (111) using the first data;
wherein the first data is an electronic payment card number indicative of an electronic payment card of the user of the second data processing apparatus; and wherein the payment is carried out between the second and third data processing apparatuses (105, 100) for the purpose of obtaining an electronic ticket; and
wherein the transmitted second data was comprised within a command to store the second data in a storage medium of the second data processing apparatus (105) as part of a predetermined record.

11. A program for controlling a computer to perform a method according to any one of claims 8 to 10.

12. A storage medium storing a program according to claim 11.

## Patentansprüche

1. Erste Datenverarbeitungseinrichtung (105), umfassend:
Kommunikationsschaltlogik (106), die dazu konfiguriert sind, unter Verwendung elektromagnetischer Induktion Daten an eine zweite Datenverarbeitungseinrichtung (100) zu übertragen oder von dieser zu empfangen, wenn die erste Datenverarbeitungseinrichtung in die Nähe der zweiten Datenverarbeitungseinrichtung (100) gebracht wird;
ein Speichermedium (108); und
Verarbeitungsschaltlogik (107), die konfiguriert ist zum:
Steuern der Kommunikationsschaltlogik, um erste Daten, die einen Benutzer der ersten Datenverarbeitungseinrichtung (105) anzeigen, an die zweite Datenverarbeitungseinrichtung (100) zu übertragen, wobei die ersten Daten eine elektronische Zahlungskartennummer sind, die eine elektronische Zahlungskarte des Benutzers der ersten Datenverarbeitungseinrichtung (105) anzeigt;
Steuern der Kommunikationsschaltlogik, um zweite Daten an die zweite Datenverarbeitungseinrichtung (100) zu übertragen oder zweite Daten von dieser zu empfangen, wobei das Übertragen oder Empfangen der zweiten Daten als Reaktion auf den Abschluss eines vorgegebenen Datenverarbeitungsereignisses erfolgt, wobei das vorgegebene Datenverarbeitungsereignis eine elektronische Zahlungskartenzahlung ist, die vom Benutzer der ersten Datenverarbeitungseinrichtung (105) an einen Benutzer der zweiten Datenverarbeitungseinrichtung (100) unter Verwendung der Zahlungskartennummer vorgenommen wird, wobei die Zahlung zwischen der ersten und der zweiten Datenverarbeitungseinrichtung (105, 100) zum Zweck des Erhalts eines elektronischen Tickets ausgeführt wird, und wobei die zweiten Daten eine Zahlungsgenehmigungsnachricht umfassen, die von der ersten Datenverarbeitungseinrichtung (105) an die zweite Datenverarbeitungseinrichtung (100) übertragen wird;
Steuern der Kommunikationsschaltlogik, um dritte Daten von der zweiten Datenverarbeitungseinrichtung (100) zu empfangen, wobei die dritten Daten als Reaktion auf den Abschluss des vorgegebenen Datenverarbeitungsereignisses und nach Empfang der Zahlungsgenehmigungsnachricht durch die zweite Datenverarbeitungseinrichtung (100) empfangen werden und die dritten Daten elektronische Ticketdaten und eine von der zweiten Datenverarbeitungseinrichtung (100) erzeugte digitale Signatur umfassen, wobei die digitale Signatur der dritten Daten unter Verwendung der ersten Daten und der elektronischen Ticketdaten erzeugt wird; und
Speichern der empfangenen dritten Daten im Speichermedium, um sie anschließend an eine dritte Datenverarbeitungseinrichtung (111) zur Durchführung eines Verifizierungsprozesses an der digitalen Signatur zu übertragen;
wobei die empfangenen dritten Daten in einem Befehl zum Speichern der dritten Daten im Speichermedium als Teil eines vorgegebenen Datensatzes enthalten sind.

2. Erste Datenverarbeitungseinrichtung nach Anspruch 1, wobei die elektronischen Ticketdaten dem Benutzer der ersten Datenverarbeitungseinrichtung die Nutzung eines vorgegebenen Dienstes ermöglichen.

3. Erste Datenverarbeitungseinrichtung nach Anspruch 1 oder Anspruch 2, wobei der Befehl, der die dritten Daten umfasst, einem Befehl zum Aktualisieren eines Datensatzes entspricht, der von der zweiten Datenverarbeitungseinrichtung übertragen wird, wobei der Befehl zum Aktualisieren eines Datensatzes dazu konfiguriert ist, Daten zu ändern, die als Teil des vorgegebenen Datensatzes gespeichert sind.

4. Erste Datenverarbeitungseinrichtung nach Anspruch 3, wobei der Befehl zum Aktualisieren des Datensatzes ferner einen Nachrichtenauthentifizierungscode umfasst.

5. Erste Datenverarbeitungseinrichtung nach einem der vorstehenden Ansprüche, wobei die empfangenen dritten Daten Informationen umfassen, die auf die Validität der dritten Daten hinweisen.

6. Erste Datenverarbeitungseinrichtung (100), umfassend:
Kommunikationsschaltlogik (101), die dazu konfiguriert ist, unter Verwendung elektromagnetischer Induktion Daten an eine zweite Datenverarbeitungseinrichtung (105) zu übertragen oder von dieser zu empfangen, wenn die zweite Datenverarbeitungseinrichtung in die Nähe der ersten Datenverarbeitungseinrichtung (100) gebracht wird; und
Verarbeitungsschaltlogik (102), die konfiguriert ist zum:
Steuern der Kommunikationsschaltlogik, um erste Daten, die auf einen Benutzer der zweiten Datenverarbeitungseinrichtung hinweisen, von der zweiten Datenverarbeitungseinrichtung (105) zu empfangen, wobei die ersten Daten eine elektronische Zahlungskartennummer sind, die auf eine elektronische Zahlungskarte des Benutzers der zweiten Datenverarbeitungseinrichtung (105) hinweist;
Steuern der Kommunikationsschaltlogik, um zweite Daten an die zweite Datenverarbeitungseinrichtung (105) zu übertragen oder zweite Daten von dieser zu empfangen, wobei das Übertragen oder Empfangen der zweiten Daten als Reaktion auf den Abschluss eines vorgegebenen Datenverarbeitungsereignisses erfolgt, wobei das vorgegebene Datenverarbeitungsereignis eine elektronische Zahlungskartenzahlung ist, die vom Benutzer der zweiten Datenverarbeitungseinrichtung (105) an einen Benutzer der ersten Datenverarbeitungseinrichtung (100) unter Verwendung der Zahlungskartennummer vorgenommen wird, wobei die Zahlung zwischen der ersten und der zweiten Datenverarbeitungseinrichtung (100, 105) zum Zweck des Erhalts eines elektronischen Tickets ausgeführt wird, und wobei die zweiten Daten eine Zahlungsgenehmigungsnachricht umfassen, die von der zweiten Datenverarbeitungseinrichtung (105) an die erste Datenverarbeitungseinrichtung (100) übertragen wird;
als Reaktion auf den Abschluss des vorgegebenen Datenverarbeitungsereignisses dritte Daten zu erzeugen, die elektronische Ticketdaten und eine digitale Signatur umfassen, wobei die digitale Signatur unter Verwendung der ersten Daten und der elektronischen Ticketdaten erzeugt wird; und
Steuern der Kommunikationsschaltlogik, nach dem Empfang der Zahlungsgenehmigungsnachricht von der zweiten Datenverarbeitungseinrichtung (105), um die dritten Daten an die zweite Datenverarbeitungseinrichtung (105) zu übertragen, um sie auf einem Speichermedium zu speichern und anschließend an eine dritte Datenverarbeitungseinrichtung (111) zu übertragen, um sie bei der Durchführung eines Verifizierungsprozesses für die digitale Signatur zu verwenden; wobei die übertragenen dritten Daten in einem Befehl zum Speichern der dritten Daten im Speichermedium als Teil eines vorgegebenen Datensatzes enthalten sind.

7. Erste Datenverarbeitungseinrichtung (111), umfassend:
Kommunikationsschaltlogik (112), die dazu konfiguriert ist, um erste Daten von einer zweiten Datenverarbeitungseinrichtung (105) zu empfangen, wobei die ersten Daten einen Benutzer der zweiten Datenverarbeitungseinrichtung (105) anzeigen, und zweite Daten von der zweiten Datenverarbeitungseinrichtung (105) zu empfangen, wobei die zweiten Daten zuvor von der zweiten Datenverarbeitungseinrichtung (105) als Reaktion auf den Abschluss eines vorgegebenen Datenverarbeitungsereignisses und nach der Übertragung einer Zahlungsgenehmigungsnachricht durch die zweite Datenverarbeitungseinrichtung (105) empfangen wurden, und wobei die zweiten Daten elektronische Ticketdaten und eine digitale Signatur umfassen, wobei die digitale Signatur unter Verwendung der ersten Daten und der elektronischen Ticketdaten erzeugt wird; und
Verarbeitungsschaltlogik (113), die konfiguriert ist zum:
Durchführen eines Verifizierungsprozesses der digitalen Signatur der zweiten Daten unter Verwendung der empfangenen ersten Daten,
als Reaktion auf eine erfolgreiche Verifizierung der digitalen Signatur der zweiten Daten, Ausgeben eines Signals, das anzeigt, dass die digitale Signatur der zweiten Daten verifiziert wurde; und als Reaktion auf eine erfolglose Verifizierung der digitalen Signatur der zweiten Daten, Ausgeben eines Signals, das anzeigt, dass die digitale Signatur der zweiten Daten nicht verifiziert wurde; wobei:
das vorgegebene Datenverarbeitungsereignis eine elektronische Zahlungskartenzahlung ist, die der Benutzer der zweiten Datenverarbeitungseinrichtung (105) unter Verwendung der ersten Daten an einen Benutzer einer dritten Datenverarbeitungseinrichtung (100) leistet; wobei die ersten Daten eine elektronische Zahlungskartennummer sind, die auf eine elektronische Zahlungskarte des Benutzers der zweiten Datenverarbeitungseinrichtung (105) hinweist; und wobei die Zahlung zwischen der zweiten und dritten Datenverarbeitungseinrichtung (105, 100) zum Zwecke des Erhalts eines elektronischen Tickets durchgeführt wird; und wobei die übertragenen zweiten Daten in einem Befehl zum Speichern der zweiten Daten in einem Speichermedium der zweiten Datenverarbeitungseinrichtung (105) als Teil eines vorgegebenen Datensatzes enthalten waren.

8. Verfahren (600) zum Betreiben einer ersten Datenverarbeitungseinrichtung (105), die eine Kommunikationsschaltlogik (107) zum Übertragen von Daten an eine oder Empfangen von Daten von einer zweiten Datenverarbeitungseinrichtung (100) unter Verwendung elektromagnetischer Induktion umfasst, wenn die erste Datenverarbeitungseinrichtung (105) in die Nähe der zweiten Datenverarbeitungseinrichtung (100) gebracht wird, und ein Speichermedium (108), wobei das Verfahren umfasst:
Steuern (601) der Kommunikationsschaltlogik, um erste Daten, die einen Benutzer der ersten Datenverarbeitungseinrichtung (105) anzeigen, an die zweite Datenverarbeitungseinrichtung (100) zu übertragen, wobei die ersten Daten eine elektronische Zahlungskartennummer sind, die eine elektronische Zahlungskarte des Benutzers der ersten Datenverarbeitungseinrichtung (105) anzeigt;
Steuern (602) der Kommunikationsschaltlogik, um zweite Daten an die zweite Datenverarbeitungseinrichtung (100) zu übertragen oder von dieser zu empfangen, wobei die Übertragung oder der Empfang der zweiten Daten als Reaktion auf den Abschluss eines vorgegebenen Datenverarbeitungsereignisses erfolgt, wobei es sich bei dem vorgegebenen Datenverarbeitungsereignis um eine elektronische Zahlungskartenzahlung handelt, die vom Benutzer der ersten Datenverarbeitungseinrichtung (105) an einen Benutzer der zweiten Datenverarbeitungseinrichtung (100) unter Verwendung der Zahlungskartennummer vorgenommen wird, wobei die Zahlung zwischen der ersten und der zweiten Datenverarbeitungseinrichtung (105, 100) zum Zweck des Erhalts eines elektronischen Tickets ausgeführt wird, und wobei die zweiten Daten eine von der ersten Datenverarbeitungseinrichtung (105) an die zweite Datenverarbeitungseinrichtung (100) übertragene Zahlungsgenehmigungsnachricht umfassen;
Steuern (603) der Kommunikationsschaltlogik, um dritte Daten von der zweiten Datenverarbeitungseinrichtung (100) zu empfangen, wobei die dritten Daten als Reaktion auf den Abschluss des vorgegebenen Datenverarbeitungsereignisses und nach Erhalt der Zahlungsgenehmigungsnachricht durch die zweite Datenverarbeitungseinrichtung (100) empfangen werden und die dritten Daten elektronische Ticketdaten und eine von der zweiten Datenverarbeitungseinrichtung (100) erzeugte digitale Signatur umfassen, wobei die digitale Signatur der dritten Daten unter Verwendung der ersten Daten und der elektronischen Ticketdaten erzeugt wird; und
Speichern (604) der empfangenen dritten Daten im Speichermedium zur anschließenden Übertragung an eine dritte Datenverarbeitungseinrichtung (111) zur Verwendung bei der Durchführung eines Verifizierungsprozesses an der digitalen Signatur; wobei die empfangenen dritten Daten in einem Befehl zum Speichern der dritten Daten im Speichermedium als Teil eines vorgegebenen Datensatzes enthalten sind.

9. Verfahren (700) zum Betreiben einer ersten Datenverarbeitungseinrichtung (100), die eine Kommunikationsschaltung (101) zum Übertragen von Daten an eine oder Empfangen von Daten von einer zweiten Datenverarbeitungseinrichtung (105) unter Verwendung elektromagnetischer Induktion umfasst, wenn die zweite Datenverarbeitungseinrichtung (105) in die Nähe der ersten Datenverarbeitungseinrichtung (100) gebracht wird, wobei das Verfahren umfasst:
Steuern (701) der Kommunikationsschaltlogik zum Empfangen erster Daten, die einen Benutzer der zweiten Datenverarbeitungseinrichtung anzeigen, von der zweiten Datenverarbeitungseinrichtung (105),
wobei die ersten Daten eine elektronische Zahlungskartennummer sind, die auf eine elektronische Zahlungskarte des Benutzers der zweiten Datenverarbeitungseinrichtung (105) hinweist;
Steuern (702) der Kommunikationsschaltlogik, um zweite Daten an die zweite Datenverarbeitungseinrichtung (105) zu übertragen oder von dieser zu empfangen, wobei die Übertragung oder der Empfang der zweiten Daten als Reaktion auf den Abschluss eines vorgegebenen Datenverarbeitungsereignisses erfolgt, wobei es sich bei dem vorgegebenen Datenverarbeitungsereignis um eine elektronische Zahlungskartenzahlung handelt, die vom Benutzer der ersten Datenverarbeitungseinrichtung (100) an einen Benutzer der zweiten Datenverarbeitungseinrichtung (105) unter Verwendung der Zahlungskartennummer vorgenommen wird, wobei die Zahlung zwischen der ersten und der zweiten Datenverarbeitungseinrichtung zum Zweck des Erhalts eines elektronischen Tickets ausgeführt wird, und wobei die zweiten Daten eine von der zweiten Datenverarbeitungseinrichtung (105) an die erste Datenverarbeitungseinrichtung (100) gesendete Zahlungsgenehmigungsnachricht umfassen;
als Reaktion auf den Abschluss des vorgegebenen Datenverarbeitungsereignisses, Erzeugen (703) dritter Daten, die elektronische Ticketdaten und eine digitale Signatur umfassen, wobei die digitale Signatur unter Verwendung der ersten Daten und der elektronischen Ticketdaten erzeugt (704) wird; und
nach dem Empfang der Zahlungsgenehmigungsnachricht von der zweiten Datenverarbeitungseinrichtung, Steuern (705) der Kommunikationsschaltlogik, um die dritten Daten an die zweite Datenverarbeitungseinrichtung (105) zur Speicherung in einem Speichermedium und anschließenden Übertragung an eine dritte Datenverarbeitungseinrichtung (111) zur Verwendung bei der Durchführung eines Verifizierungsprozesses an der digitalen Signatur zu übertragen, wobei die dritten Daten in einem Befehl zum Speichern der dritten Daten in dem Speichermedium als Teil eines vorgegebenen Datensatzes enthalten sind.

10. Verfahren (800) zum Betreiben einer ersten Datenverarbeitungseinrichtung (111), die eine Kommunikationsschaltlogik (112) umfasst, wobei das Verfahren umfasst:
Steuern (801) der Kommunikationsschaltlogik, um erste Daten von einer zweiten Datenverarbeitungseinrichtung (105) zu empfangen, wobei die ersten Daten einen Benutzer der zweiten Datenverarbeitungseinrichtung anzeigen, und um zweite Daten von der zweiten Datenverarbeitungseinrichtung zu empfangen, wobei die zweiten Daten zuvor von der zweiten Datenverarbeitungseinrichtung (105) als Reaktion auf den Abschluss eines vorgegebenen Datenverarbeitungsereignisses und nach der Übertragung einer Zahlungsgenehmigungsnachricht durch die zweite Datenverarbeitungseinrichtung (105) empfangen wurden, und wobei die zweiten Daten elektronische Ticketdaten und eine digitale Signatur umfassen, wobei die digitale Signatur unter Verwendung der ersten Daten und der elektronischen Ticketdaten erzeugt wird;
Durchführen (802) eines Verifizierungsprozesses der digitalen Signatur der zweiten Daten unter Verwendung der empfangenen ersten Daten;
als Reaktion auf eine erfolgreiche Verifizierung der digitalen Signatur der zweiten Daten, Ausgeben (808) eines Signals, das anzeigt, dass die digitale Signatur der zweiten Daten verifiziert wurde; und
als Reaktion auf eine erfolglose Verifizierung der digitalen Signatur der zweiten Daten Ausgeben (804, 807) eines Signals, das anzeigt, dass die digitale Signatur der zweiten Daten nicht verifiziert wurde; wobei:
das vorgegebene Datenverarbeitungsereignis eine elektronische Zahlungskartenzahlung ist, die der Benutzer der zweiten Datenverarbeitungseinrichtung (105) unter Verwendung der ersten Daten an einen Benutzer einer dritten Datenverarbeitungseinrichtung (111) leistet;
wobei die ersten Daten eine elektronische Zahlungskartennummer sind, die auf eine elektronische Zahlungskarte des Benutzers der zweiten Datenverarbeitungseinrichtung hinweist; und wobei die Zahlung zwischen der zweiten und dritten Datenverarbeitungseinrichtung (105, 100) zum Zwecke des Erhalts eines elektronischen Tickets durchgeführt wird; und
wobei die übertragenen zweiten Daten in einem Befehl zum Speichern der zweiten Daten in einem Speichermedium der zweiten Datenverarbeitungseinrichtung (105) als Teil eines vorgegebenen Datensatzes enthalten waren.

11. Programm zum Steuern eines Computers zur Durchführung eines Verfahrens nach einem der Ansprüche 8 bis 10.

12. Speichermedium, das ein Programm nach Anspruch 11 speichert.

## Revendications

1. Premier appareil de traitement de données (105) comprenant :
un circuit de communication (106) configuré pour transmettre des données à un deuxième appareil de traitement de données (100) ou recevoir des données de celui-ci à l'aide d'une induction électromagnétique lorsque le premier appareil de traitement de données est placé à proximité du deuxième appareil de traitement de données (100) ;
un support de stockage (108) ; et
un circuit de traitement (107) configuré :
pour commander le circuit de communication afin de transmettre les premières données indiquant un utilisateur du premier appareil de traitement de données (105) au deuxième appareil de traitement de données (100), dans lequel les premières données sont un numéro de carte de paiement électronique indiquant une carte de paiement électronique de l'utilisateur du premier appareil de traitement de données (105) ;
pour commander le circuit de communication afin de transmettre des deuxièmes données au deuxième appareil de traitement de données (100) ou recevoir les deuxièmes données de celui-ci, la transmission ou la réception des deuxièmes données se produisant en réponse à l'achèvement d'un événement de traitement de données prédéterminé, dans lequel l'événement de traitement de données prédéterminé est un paiement électronique par carte de paiement effectué par l'utilisateur du premier appareil de traitement de données (105) à un utilisateur du deuxième appareil de traitement de données (100) à l'aide du numéro de la carte de paiement, dans lequel le paiement est effectué entre le premier et le deuxième appareil de traitement de données (105, 100) dans le but d'obtenir un billet électronique, et dans lequel les deuxièmes données comprennent un message d'approbation de paiement transmis par le premier appareil de traitement de données (105) au deuxième appareil de traitement de données (100) ;
pour commander le circuit de communication pour recevoir des troisièmes données du deuxième appareil de traitement des données (100), les troisièmes données étant reçues en réponse à l'achèvement de l'événement de traitement des données prédéterminé et après réception du message d'approbation de paiement par le deuxième appareil de traitement des données (100), et les troisièmes données comprenant des données de billet électronique et une signature numérique générée par le deuxième appareil de traitement de données (100), dans lequel la signature numérique des troisièmes données est générée à l'aide des premières données et des données de billet électronique ; et
pour stocker les troisièmes données reçues dans le support de stockage pour une transmission ultérieure à un troisième appareil de traitement de données (111), pour une utilisation dans l'exécution d'un processus de vérification sur la signature numérique ;
dans lequel les troisièmes données reçues sont comprises dans une commande de stockage des troisièmes données dans le support de stockage en tant que partie d'un enregistrement prédéterminé.

2. Premier appareil de traitement de données selon la revendication 1, dans lequel les données de billet électronique permettent à l'utilisateur du premier appareil de traitement de données d'utiliser un service prédéterminé.

3. Premier appareil de traitement de données selon la revendication 1 ou la revendication 2, dans lequel la commande comprenant les troisièmes données correspond à une commande d'enregistrement de mise à jour transmise par le deuxième appareil de traitement des données, dans lequel la commande d'enregistrement de mise à jour est configurée pour modifier les données stockées en tant que partie de l'enregistrement prédéterminé.

4. Premier appareil de traitement de données selon la revendication 3, dans lequel la commande de mise à jour de l'enregistrement comprend en outre un code d'authentification de message.

5. Premier appareil de traitement de données selon l'une quelconque revendication précédente, dans lequel les troisièmes données reçues comprennent des informations indiquant une validité des troisièmes données.

6. Premier appareil de traitement de données (100) comprenant :
un circuit de communication (101) configuré pour transmettre des données à un deuxième appareil de traitement de données (105) ou recevoir des données de celui-ci à l'aide d'une induction électromagnétique lorsque le deuxième appareil de traitement de données est placé à proximité du premier appareil de traitement de données (100) ; et
un circuit de traitement (102) configuré :
pour commander le circuit de communication pour recevoir des premières données indiquant un utilisateur du deuxième appareil de traitement de données à partir du deuxième appareil de traitement de données (105), dans lequel les premières données sont un numéro de carte de paiement électronique indiquant une carte de paiement électronique de l'utilisateur du deuxième appareil de traitement de données (105) ;
pour commander le circuit de communication pour transmettre des deuxièmes données au second appareil de traitement de données (105) ou recevoir des deuxièmes données en provenance de celui-ci, la transmission ou la réception des deuxièmes données se produisant en réponse à la réalisation d'un événement de traitement des données prédéterminé, dans lequel l'événement de traitement des données prédéterminé est un paiement par carte de paiement électronique effectué par l'utilisateur du deuxième appareil de traitement de données (105) à un utilisateur du premier appareil de traitement de données (100) à l'aide du numéro de la carte de paiement, dans lequel le paiement est effectué entre le premier et le deuxième appareil de traitement de données (100, 105) dans le but d'obtenir un billet électronique, et dans lequel les deuxièmes données comprennent un message d'approbation de paiement transmis par le deuxième appareil de traitement de données (105) au premier appareil de traitement de données (100) ;
en réponse à l'achèvement de l'événement de traitement de données prédéterminé, pour générer des troisièmes données comprenant des données de billet électronique et une signature numérique, la signature numérique étant générée à l'aide des premières données et des données de billet électronique ; et
après réception du message d'approbation de paiement en provenance du deuxième appareil de traitement des données (105), pour contrôler le circuit de communication pour transmettre les troisièmes données au deuxième appareil de traitement de données (105) pour leur stockage sur un support de stockage et une transmission ultérieure à un troisième appareil de traitement de données (111) pour usage dans l'exécution d'un processus de vérification sur la signature numérique ; les troisièmes données transmises étant comprises dans une commande pour stocker les troisièmes données dans le support de stockage en tant que partie d'un enregistrement prédéterminé.

7. Premier appareil de traitement de données (111) comprenant :
un circuit de communication (112) configuré pour recevoir les premières données d'un deuxième appareil de traitement de données (105), les premières données indiquant un utilisateur du deuxième appareil de traitement de données (105), et pour recevoir les deuxièmes données du deuxième appareil de traitement des données (105), les deuxièmes données étant préalablement reçues par le deuxième appareil de traitement des données (105) en réponse à l'achèvement d'un événement de traitement des données prédéterminé et à la suite de la transmission d'un message d'approbation de paiement par le deuxième appareil de traitement de données (105), et les deuxièmes données comprenant des données de billet électronique et une signature numérique, la signature numérique étant générée à l'aide des premières données et des données de billet électronique ; et
un circuit de traitement (113) configuré :
pour exécuter un processus de vérification de la signature numérique des secondes données à l'aide des premières données reçues,
en réponse à une vérification réussie de la signature numérique des deuxièmes données, pour émettre un signal indiquant que la signature numérique des secondes données a été vérifiée ; et en réponse à une vérification infructueuse de la signature numérique des deuxièmes données, pour émettre un signal indiquant que la signature numérique des deuxièmes données n'a pas été vérifiée ; dans lequel :
l'événement prédéterminé de traitement des données est un paiement par carte de paiement électronique effectué par l'utilisateur du deuxième appareil de traitement de données (105) à un utilisateur d'un troisième appareil de traitement de données (100) à l'aide des premières données ; dans lequel la première donnée est un numéro de carte de paiement électronique indiquant une carte de paiement électronique de l'utilisateur du deuxième appareil de traitement de données (105) ; et dans lequel le paiement est effectué entre les deuxième et troisième appareils de traitement de données (105, 100) dans le but d'obtenir un billet électronique ; et dans lequel les deuxièmes données transmises étaient comprises dans une commande de stockage des deuxièmes données sur un support de stockage du deuxième appareil de traitement de données (105) en tant que partie d'un enregistrement prédéterminé.

8. Procédé (600) de fonctionnement d'un premier appareil de traitement de données (105) comprenant un circuit de communication (107) pour la transmission de données à un deuxième appareil de traitement de données (100) ou la réception de données de celui-ci à l'aide d'une induction électromagnétique lorsque le premier appareil de traitement de données (105) est placé à proximité du deuxième appareil de traitement de données (100), et un support de stockage (108), dans lequel le procédé comprend :
la commande (601) du circuit de communication pour transmettre les premières données indiquant un utilisateur du premier appareil de traitement de données (105) au deuxième appareil de traitement de données (100), dans lequel les premières données sont un numéro de carte de paiement électronique indiquant une carte de paiement électronique de l'utilisateur du premier appareil de traitement de données (105) ;
la commande (602) du circuit de communication pour transmettre des deuxièmes données au deuxième appareil de traitement de données (100) ou recevoir des deuxièmes données de celui-ci, la transmission ou la réception des deuxièmes données se produisant en réponse à l'achèvement d'un événement de traitement des données prédéterminé, l'événement de traitement des données prédéterminé étant un paiement par carte de paiement électronique effectué par l'utilisateur du premier appareil de traitement de données (105) à un utilisateur du deuxième appareil de traitement de données (100) à l'aide du numéro de carte de paiement, le paiement étant effectué entre le premier et le deuxième appareil de traitement de données (105, 100) dans le but d'obtenir un billet électronique, et les deuxièmes données comprenant un message d'approbation de paiement transmis à partir du premier appareil de traitement de données (105) au deuxième appareil de traitement de données (100) ;
la commande (603) du circuit de communication pour recevoir les troisièmes données du deuxième appareil de traitement de données (100), les troisièmes données étant reçues en réponse à l'achèvement de l'événement de traitement de données prédéterminé et après réception du message d'approbation de paiement par le deuxième appareil de traitement de données (100), et les troisièmes données comprenant les données du billet électronique et une signature numérique générée par le deuxième appareil de traitement de données (100), dans lequel la signature numérique des troisièmes données est générée à l'aide des premières données et des données du billet électronique ; et
le stockage (604) des troisièmes données reçues dans le support de stockage pour une transmission ultérieure à un troisième appareil de traitement de données (111), pour une utilisation dans la réalisation d'un processus de vérification sur la signature numérique ; les troisièmes données reçues étant comprises dans une commande de stockage des troisièmes données dans le support de stockage en tant que partie d'un enregistrement prédéterminé.

9. Procédé (700) de fonctionnement d'un premier appareil de traitement de données (100) comprenant un circuit de communication (101) pour la transmission des données à un deuxième appareil de traitement de données (105) ou la réception des données de celui-ci à l'aide d'une induction électromagnétique lorsque le deuxième appareil de traitement de données (105) est placé à proximité du premier appareil de traitement de données (100), dans lequel le procédé comprend :
la commande (701) du circuit de communication pour recevoir les premières données indiquant un utilisateur du deuxième appareil de traitement de données à partir du deuxième appareil de traitement de données (105),
dans lequel les premières données sont un numéro de carte de paiement électronique indicatif d'une carte de paiement électronique de l'utilisateur du deuxième appareil de traitement de données (105) ;
la commande (702) du circuit de communication pour transmettre des deuxièmes données au deuxième appareil de traitement de données (105) ou recevoir des deuxièmes données de celui-ci, la transmission ou la réception des deuxièmes données se produisant en réponse à l'achèvement d'un événement de traitement des données prédéterminé, dans lequel l'événement de traitement des données prédéterminé est un paiement par carte de paiement électronique effectué par l'utilisateur du premier appareil de traitement de données (100) à un utilisateur du deuxième appareil de traitement de données (105) à l'aide du numéro de carte de paiement, dans lequel le paiement est effectué entre le premier et le deuxième appareil de traitement des données dans le but d'obtenir un billet électronique, et dans lequel les deuxièmes données comprennent un message d'approbation de paiement transmis par le deuxième appareil de traitement de données (105) au premier appareil de traitement de données (100) ;
en réponse à l'achèvement de l'événement de traitement de données prédéterminé, la génération (703) des troisièmes données comprenant des données de billet électronique et une signature numérique, la signature numérique étant générée (704) à l'aide des premières données et des données de billet électronique ; et
après réception du message d'approbation de paiement en provenance du deuxième appareil de traitement de données, la commande (705) du circuit de communication pour transmettre des troisièmes données au deuxième appareil de traitement de données (105) pour un stockage dans un support de stockage et une transmission ultérieure à un troisième appareil de traitement de données (111) pour un usage dans l'exécution d'un processus de vérification de la signature numérique, dans lequel les troisièmes données sont comprises dans une commande pour stocker les troisièmes données dans le support de stockage en tant que partie d'un enregistrement prédéterminé.

10. Procédé (800) de fonctionnement d'un premier appareil de traitement de données (111) comprenant un circuit de communication (112), dans lequel le procédé comprend :
la commande (801) du circuit de communication pour recevoir des premières données d'un deuxième appareil de traitement de données (105), les premières données indiquant un utilisateur du deuxième appareil de traitement de données, et pour recevoir des deuxièmes données du deuxième appareil de traitement de données, les deuxièmes données étant reçues précédemment par le deuxième appareil de traitement de données (105) en réponse à l'achèvement d'un événement de traitement de données prédéterminé et suite à la transmission d'un message d'approbation de paiement par le deuxième appareil de traitement de données (105), et les deuxièmes données comprenant des données de billet électronique et une signature numérique, la signature numérique étant générée à l'aide des premières données et des données de billet électronique ;
l'exécution (802) d'un processus de vérification de la signature numérique des deuxièmes données à l'aide des premières données reçues ;
en réponse à une vérification réussie de la signature numérique des deuxièmes données, l'émission (808) d'un signal indiquant que la signature numérique des deuxièmes données a été vérifiée ; et
en réponse à une vérification infructueuse de la signature numérique des deuxièmes données, l'émission (804, 807) d'un signal indiquant que la signature numérique des deuxièmes données n'a pas été vérifiée ; dans lequel :
l'événement prédéterminé de traitement de données est un paiement par carte de paiement électronique effectué par l'utilisateur du deuxième appareil de traitement de données (105) à un utilisateur d'un troisième appareil de traitement de données (111) à l'aide des premières données ;
dans lequel les premières données sont un numéro de carte de paiement électronique indiquant une carte de paiement électronique de l'utilisateur du deuxième appareil de traitement de données ; et dans lequel le paiement est effectué entre les deuxième et troisième appareils de traitement de données (105, 100) dans le but d'obtenir un billet électronique ; et
dans lequel les deuxièmes données transmises étaient comprises dans une commande pour stocker la deuxième donnée sur un support de stockage du deuxième appareil de traitement de données (105) en tant que partie d'un enregistrement prédéterminé.

11. Programme de contrôle d'un ordinateur pour l'exécution d'un procédé selon l'une quelconque des revendications 8 à 10.

12. Support de stockage stockant un programme selon la revendication 11.
